# EUROPEAN PATENT SPECIFICATION

(11) **EP 1 806 268 B1**
(45) Date of publication and mention of the grant of the patent: **25.12.2013**
(21) Application number: 05776754.3
(22) Date of filing: 31.08.2005
(51) Int. Cl.: B62D 1/16, B60R 21/05

(54) **SUPPORT STRUCTURE OF STEERING COLUMN**
STÜTZSTRUKTUR FÜR LENKSÄULE
STRUCTURE SUPPORT D'UNE COLONNE DE DIRECTION

(30) Priority: 02.09.2004 JP 2004256343
(43) Date of publication of application: 11.07.2007
(73) Proprietor: Nissan Motor Light Truck Co., Ltd., Saitama 330-8669 (JP)
(72) Inventor: TANAKA, Yukihiro;, -chome, Ageo-shi, Saitama 3620046; (JP); MIURA, Tsuyoshi;, -chome, Ageo-shi, Saitama 3620046; (JP); ISHII, Hideaki;, -chome, Ageo-shi, Saitama 3620046; (JP); KIKUCHI, Takayuki;, -chome, Ageo-shi, Saitama 3620046; (JP); HOSONO, Megumi;, -chome, Ageo-shi, Saitama 3620046; (JP); DOI, Masato;, -chome, Ageo-shi, Saitama 3620046; (JP)
(74) Representative: Grünecker, Kinkeldey, Stockmair & Schwanhäusser
(86) International application number: PCT/JP2005/015880
(87) International publication number: WO 2006/025436

(56) References cited:
- EP-A2- 1 431 159
- JP-A- 8 026 083
- JP-A- 8 142 876
- JP-A- 10 273 072
- JP-A- 11 034 885
- JP-A- 11 278 286
- JP-A- 2000 177 599
- JP-A- 2003 231 473
- JP-A- 2003 231 473
- JP-U- 1 158 276
- JP-U- 61 138 668
- JP-U- 62 000 476

## Description

The present invention relates to a steering column supporting structure according to the preamble of independent claim 1. Such a steering column supporting structure can be taken from the prior art document JP 11-034885 A.
Document JP 08-026083 A discloses a supporting structure is equipped with a brake pedal bracket which supports the basic end of a brake pedal in a turnable manner, projecting into a vehicle from dash panel, and a reinforcement which supports a steering post, being arranged in the car width direction along an instrument panel. On the brake pedal bracket, a pedal stopper member which positions the brake pedal through the contact in the returning turn of the brake pedal is installed, and a part of the pedal stopper member is extended to the reinforcement, and the extension end is joined with a steering bracket which is integrally fixed with the reinforcement.
Document JP 10-273072 A discloses a steering column support in an instrument panel device constituted of structural members. An instrument panel member is mounted on an instrument panel structural body constituted of closed cross section shaped structural members. A bracket member on which a steering column is mounted is fixed to an instrument panel structural body. One end of the bracket member is mounted on the pillar of a car body. The center part the bracket member is extended to the front side of a vehicle and is mounted on a pedal bracket on the side of a dashpanel of the vehicle.
Document JP 2003-231473 A discloses a steering device provided with a steering gear device supported on a body and interlocked and connected with right and left dirigible road wheels. An interlocking gear device is supported on the body in front of the steering gear device via a bracket to interlock and connect the steering gear device with a lower end part of a steering shaft. The bracket is provided with a front part frame composing a front part of the bracket with its front end part supported on the body and a rear part side extending downward toward the rear, and a rear part frame composing a rear part of the bracket and extending rearward from a rear end part of the front part frame with its rear end part supported on the body. The interlocking device is supported by the rear part frame.

In a cab-over truck or the like, a steering column is secured to a cab by using a supporting structure as disclosed in New Car Preview "Introduction to NISSAN Atlas F23 series car" (non-patent document 1). Namely, the steering column is secured to the cab through a steering column bracket formed to have channel section and to obliquely rise from a front portion of a cab floor toward a rear side of the vehicle. In order to improve supporting stiffness of the steering column, an upper portion of the steering column bracket is fixedly secured to a member constituting an instrument panel.
the non-Patent Document 1: New Car Preview "Introduction to NISSAN Atlas F23 series car", NISSAN MOTORS, CO., LTD, Jan. 1992, p. C-48.

However, in such a conventional supporting structure, although the upper portion of the steering column bracket is fixedly secured to a member constituting the instrument panel, a total length of the steering column bracket becomes long, so that the supporting stiffness of the steering column might be slightly insufficient. If the supporting stiffness of the steering column were insufficient, for example, vibration caused by a force coming from a road surface is transmitted to the steering wheel and therefore, a driver may experience unpleasantness.

The present invention has an object thereof to provide a steering column supporting structure as indicated above with a compact structure and capable of improving supporting stiffness of a steering column and reducing vibration occurring at a steering wheel by fixedly securing a middle portion of a steering column bracket to a pedal bracket.

According to the present invention said object is solved by steering column supporting structure having the features of independent claim 1. Preferred embodiments are laid down in the dependent claims.
Accordingly, there is provided a steering column supporting structure, wherein an upper portion of a steering column bracket configured to attach a steering column to a cab is secured to a member constituting an instrument panel, and a middle portion of the steering column bracket is secured to a pedal bracket configured to support a pedal.
A rotational center shifting apparatus is provided so as for a rotational center of the steering column in a fore and aft direction of a vehicle to be shifted toward a rear side of the vehicle with respect to an intersection between an axis of a steering shaft disposed under the steering column and the cab floor.

### EFFECT OF THE INVENTION

According to the steering column supporting structure of the present invention, the upper portion of the steering column bracket configured to attach the steering column to the cab is secured to a member constituting the instrument panel, and the middle portion thereof is secured to the pedal bracket. Therefore, a total length of the steering column bracket can be shortened, and the middle portion thereof is secured to the pedal bracket which can be strongly Integrated with the cab, so that it is possible to improve attaching stiffness of the steering column bracket to the cab. In addition, due to the described improvement in the attaching stiffness of the steering column bracket, the supporting stiffness of the steering column can be improved, so that it is possible to greatly reduce vibration occurring at the steering wheel.

In addition, due to the rotational center shifting apparatus, at an occurrence of frontal collision such as offset collision of the vehicle, the steering wheel can follow a trajectory in the movement of a driver's head, so that it is possible to downsize an airbag device attached to the steering wheel. Namely, at the occurrence of frontal collision of the vehicle, a driver rotationally moves toward the front of the vehicle due to inertia about a seating surface of a seat as a rotational center. On the other hand, the steering wheel rotationally moves toward the front of the vehicle about a rotational center which is shifted toward the rear side of the vehicle with respect to an intersection of an axis of the steering shaft with the cab floor due to deformation of the cab floor. Accordingly, the rotational center of the steering wheel can be closer to the rotational center of the driver and accordingly, it becomes possible to allow the steering wheel to follow the trajectory in the movement of the driver's head.

### BRIEF DESCRIPTION OF THE DRAWINGS

Fig. 1 is an explanatory view for explaining an embodiment of a steering column supporting structure according to the preamble of claim 1;
Fig. 2 is an explanatory view for explaining a rotational center shifting apparatus according to a first embodiment of the present invention:
Fig. 3 is an explanatory view for explaining a rotational center shifting apparatus according to a second embodiment of the present invention;
Fig. 4 is an explanatory view for explaining a rotational center shifting apparatus according to a third embodiment of the present invention;
Fig. 5 is an explanatory view for explaining a rotational center shifting apparatus according to a fourth embodiment of the present invention;
Fig. 6 is an explanatory view for explaining a rotational center shifting apparatus according to a fifth embodiment of the present invention; and
Fig. 7 is an explanatory view for explaining a steering column separating mechanism.

### EXPLANATION OF REFERENCE SYMBOLS

- 10: steering shaft
- 12: steering column
- 14: steering column bracket
- 18: instrument member
- 20: pedal bracket
- 24: cab floor
- 26: reinforcing member
- 32: intersection
- 34: steering support link
- 36: steering support rod
- 44: auxiliary steering support rod
- 46: steering support wire
- 48: steering support link
- 50: steering support wire
- 52: engagement hole

Hereinafter, the present invention will be described in detail with reference to the accompanying drawings.

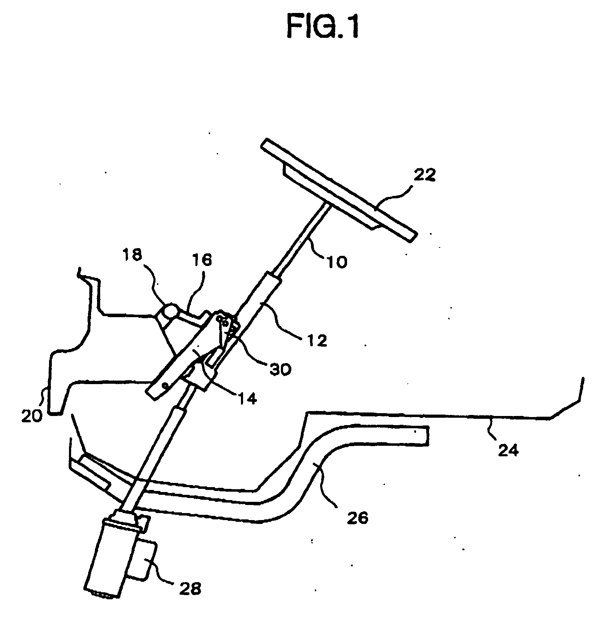

Figure 1 is an explanatory view for explaining an embodiment of a steering column supporting structure according to the preamble of claim 1.
A steering column 12 which pivotally supports a steering shaft 10 is secured to a cab of a cab-over truck or the like, through a steering column bracket 14 formed to have a channel section. An upper portion of the steering column bracket 14 is fixedly secured through a steering support bracket 16 to a member constituting an instrument panel, for example, an instrument member 18 which extends in a width direction of the vehicle. In addition, a middle portion of the steering column bracket 14 is fixedly secured to a pedal bracket 20 which permits suspension of and supports pedals such as an acceleration pedal and a brake pedal in a front portion of the vehicle.

A steering wheel 22 is attached to an end of the steering shaft 10 which extends upwards from the steering column 12. On the other hand, the steering shaft 10 which extends downwards from the steering column 12 penetrates a cab floor 24 constituting the cab and is connected to a steering gear box 28 which is disposed under a reinforcing member 26 such as a pipe member configured to reinforce the cab floor. In the drawing figure, reference numeral 30 denotes a well-known tilt mechanism for adjusting a tilt angle of the steering wheel 22 depending on a body size or the like of a driver.

According to such a construction, while an upper portion of the steering column bracket 14 configured to attach the steering column 12 to the cab is fixedly secured to the instrument member 18, the middle portion thereof is fixedly secured to the pedal bracket 20. Therefore, a total length of the steering column bracket 14 becomes shorter, and In addition, the middle portion thereof is fixedly secured to the pedal bracket 20 which can be strongly integrated with the cab, so that it is possible to improve attaching stiffness of the steering column bracket 14 to the cab. Due to the improvement of the attaching stiffness of the steering column bracket 14, supporting stiffness of the steering column 12 can be improved, so that it is possible to greatly reduce vibration occurring at the steering wheel 22.

It is well-known that, at an occurrence of frontal collision such as offset collision of a vehicle, a driver rotationally moves toward the front of the vehicle due to inertia about a seating surface of a seat as a rotational center. Even if the driver fastens the seat belt, the driver's head may collide with the steering wheel or the like. Therefore, in general, an air bag device is attached to the steering wheel. On the other hand, the steering wheel rotatlonally moves toward the front of the vehicle about the vicinity of a connection portion of the steering shaft and the steering gear box as a rotational center due to deformation of the cab floor and the reinforcing member disposed along a lower surface of the cab floor.

However, since the rotational centers of the driver and the steering wheel are different from each other, a trajectory in the movement of the driver's head can be different from that of the steering wheel. Therefore, there is a need to expand the airbag device attached to the steering wheel in a size larger than a diameter of the steering wheel from the viewpoint of securing safety for the driver, so that the airbag device may be formed in a larger size. The larger-sized airbag device causes an increase in the cost. In addition, there Is a problem of an increase in the weight of the vehicle and a reduction in the fuel consumption rate thereby, and so on.

Therefore, a mechanism that enables the steering wheel to follow the trajectory in the movement of the driver's head and is able to minimize the airbag device Is provided based on the steering column supporting structure shown in Fig. 1. Namely, there Is provided a rotational center shifting apparatus which allows the rotational center of the steering column in respect of the fore and aft direction of the vehicle to be shifted toward the rear side of the vehicle with respect to an intersection of an axis of the steering shaft disposed under the steering column with the cab floor.

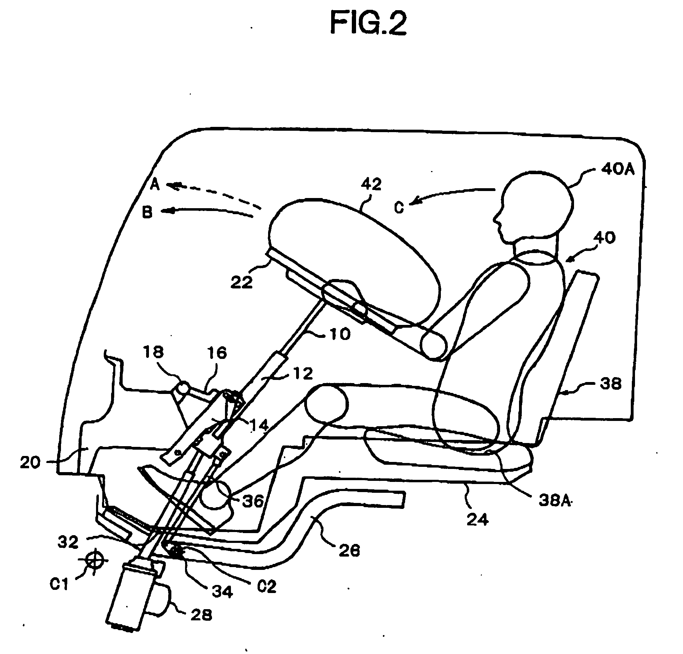

Figure 2 is an explanatory view for explaining a rotational center shifting apparatus according to a first embodiment of the present invention.
As a reinforcing member 26 configured to reinforce the cab floor 24, a steering support link 34 (rotating member) which can rotate about a rotational axis extending in the width direction of the vehicle is fixed to a portion which is located in the rear side of the vehicle with respect to an intersection 32 between an axis of the steering shaft 10 below the steering column 12 and the cab floor 24. In addition, a lower end of the steering column 12 is connected to another portion of the steering support link 34 rather than the rotational axis thereof via a steering support rod 36 which extends downwards along the steering shaft 10. The upper and lower ends of the steering support rod 36 are fixed to the steering column 12 and the steering support link 34, respectively, in a mutually rotatable manner.

According to such a construction, when the steering wheel 22 rotationally moves toward the front of the vehicle along with the occurrence of frontal collision of the vehicle, movement of the steering column 12 can be restricted by the steering support rod 36, and the steering column 12 carries out a rotational movement about an axis of rotational of the steering support link 34 toward the front of the vehicle. Accordingly, as shown in the drawing figure, the rotational center of the steering column 12, that is, the rotational center of the steering wheel 22 is shifted from a position C₁ to a position C₂ and the trajectory thereof is changed from a trajectory A to a trajectory B.

Therefore, even if a driver 40 rotationally moves toward the front of the vehicle about a seating surface 38A of the seat 38 as a rotational center, the rotational center of the steering wheel 22 becomes closer to the rotational center of the driver, so that it is possible to allow the steering wheel 22 to follow a trajectory C in the movement of a head 40A. Accordingly, the head 40A can be received in the central portion of the airbag 42. As a result, even if the airbag 42 is not expanded in a size larger than the diameter of the steering wheel 22, the safety for the driver 40 can be secured. In addition, due to the smaller-sized airbag, it is possible to achieve curtailment of the cost while reducing the weight of the vehicle, and so on.

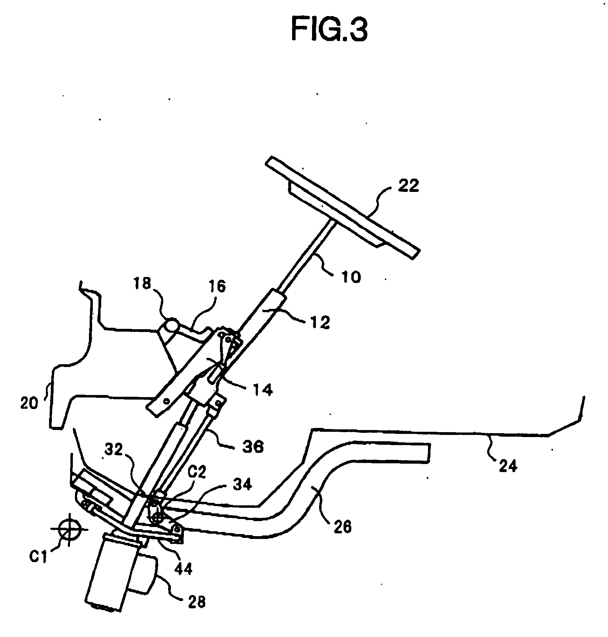

Figure 3 is an explanatory view for explaining a rotational center shifting apparatus according to a second embodiment of the present invention.
In the embodiment, in addition to the aforementioned construction of the first embodiment, an auxiliary steering support rod 44 is provided. One end of the auxiliary steering support rod 44 is fixed to a portion of the reinforcing member 26 which portion is located in the front side of the vehicle with respect to the intersection 32, and the other end thereof is secured to the steering support link 34. More specifically, the other end of the auxiliary steering support rod 44 is fixed to such a position that, when the auxiliary steering support rod 44 moves toward the rear side of the vehicle due to deformation of the reinforcing member 26. the steering support link 34 can be rotated in the direction in which the steering support rod 36 is pulled downwards. Here, the auxiliary steering support rod 44 Is disposed to extend in the fore and aft direction of the vehicle along the reinforcing member 26, and both ends thereof are fixedly secured to the reinforcing member 26 and the steering support link 34, respectively, in a mutually rotatable manner.

According to such a construction, if the front of the reinforcing member 26 is crushed and deformed at an occurrence of frontal collision of the vehicle, the auxiliary steering support rod 44 moves toward the rear side of the vehicle. Subsequently, due to the movement of the auxiliary steering support rod 44, the steering support link 34 rotates, and the steering support rod 36 is pulled downwards. As a result, even if the cab is deformed at the occurrence of frontal collision, the upward movement of the steering column 12 is suppressed, so that the following accuracy of the steering wheel 22 with respect to the trajectory of the driver's head can be improved. Accordingly, it is possible to effectively secure safety of the driver. Other operations and effects are the same as those of the first embodiment, and thus, detailed description thereof is omitted (hereinafter, the detailed description thereof will be similarly omitted).

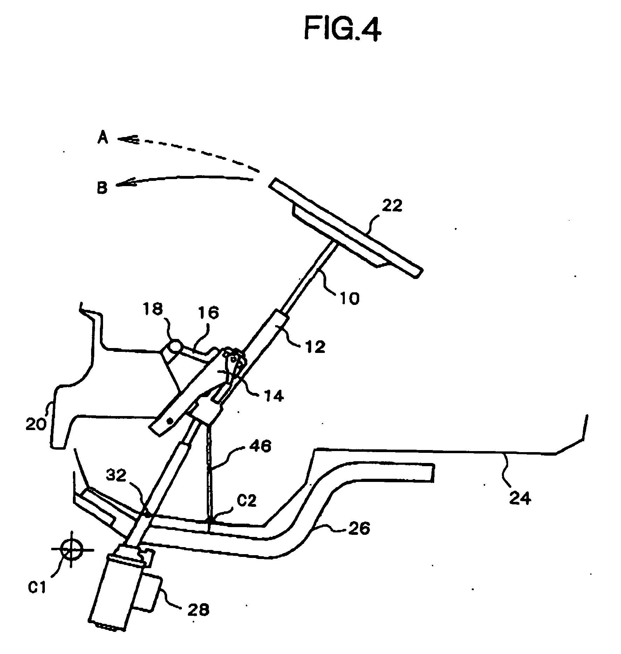

Figure 4 is an explanatory view for explaining a rotational center shifting apparatus according to a third embodiment of the present invention.
A lower portion of the steering column 12 is connected via a steering support wire 46 to an upper surface of the cab floor 24 which is located in the rear side of the vehicle with respect to the intersection 32.
According to such a construction, when the steering wheel 22 rotationally moves toward the front of the vehicle along with the occurrence of frontal collision of the vehicle, movement of the steering column 12 can be restricted by the steering support wire 46, and the steering column 12 rotationally moves toward the front of the vehicle about a connection portion of the steering support wire 46 connected to the cab floor 24, as a rotating center. Accordingly, as shown in the figure, the rotational center of the steering column 12, that is, the rotational center of the steering wheel 22 is shifted from a position C₁ to a position C₂ and the trajectory thereof is changed from a trajectory A to a trajectory B. In addition, similarly to the aforementioned embodiment, the steering wheel 22 can follow the trajectory of the driver's head.

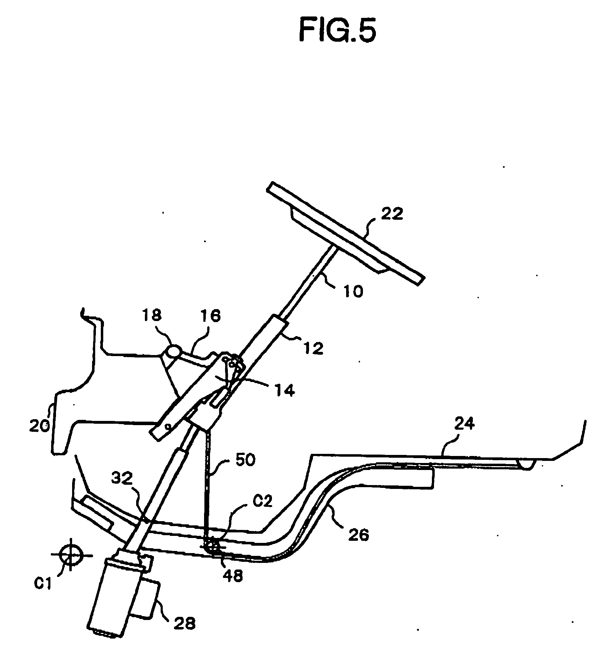

Figure 5 is an explanatory view for explaining a rotational center shifting apparatus according to a fourth embodiment of the present invention.
A steering support link 48 (rotational member) which can rotate about a rotational axis extending in the width direction of the vehicle is fixed to a portion of the reinforcing member 26 which portion is located in the rear side of the vehicle with respect to the intersection 32. The lower portion of the steering column 12 is connected to a rear lower surface of the cab floor 24 via a steering support wire 50 which is configured that a tensile direction thereof is changed by the steering support link 48.

According to such a construction, in addition to the operations and effects of the third embodiment, when the rear portion of the cab floor 24 is deformed upwards along with the occurrence of frontal collision of the vehicle, the steering support wire 50 is pulled toward the rear side of the vehicle. Therefore, a direction of the tensile force of the steering support wire 50 is changed by the steering support link 48. so that the steering column 12 can be pulled downwards. As a result even if the cab is deformed at the occurrence of frontal collision, upward movement of the steering column 12 is suppressed, so that the following accuracy of the steering wheel 22 with respect to the trajectory of the driver's head can be Improved. Accordingly, it is possible to effectively secure safety of the driver.

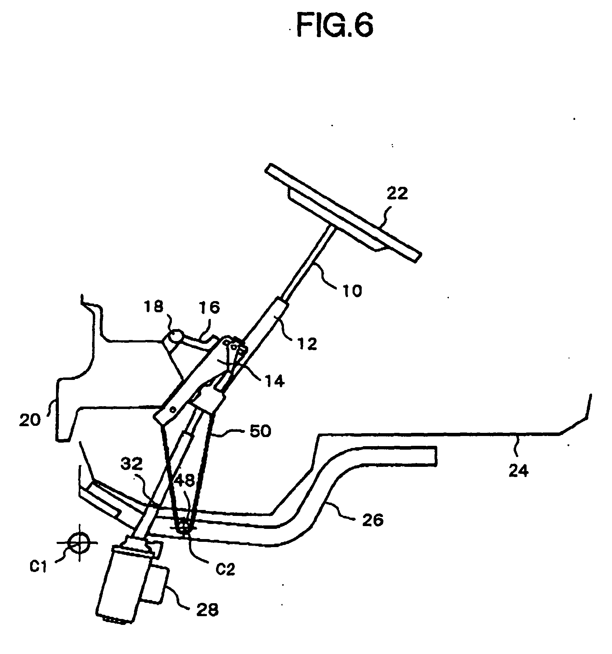

Figure 6 Is an explanatory view for explaining a rotational center shifting apparatus according to a fifth embodiment of the present invention.
As similar to the fourth embodiment, the steering support link 48 (rotational member) which can rotate about a rotational axis extending in the width direction of the vehicle is fixed to a portion of the reinforcing member 26 which portion is located in the rear side of the vehicle with respect to the intersection 32. The lower portion of the steering column 12 is connected to a lower portion of the steering column bracket 14 via the steering support wire 50 which is configured that a tensile direction thereof is changed by the steering support link 48.

According to such a construction, in addition to the operations and effects of the third embodiment, when the surrounding portion of the pedal bracket 20 is deformed upwards along with an occurrence of frontal collision of the vehicle, the steering support wire 50 connected to the lower portion of the steering column bracket 14 is pulled upwards. Therefore, a direction of the tensile force of the steering support wire 50 is changed by the steering support link 48, so that the steering column 12 can be pulled downwards. As a result, even if the cab is deformed at the occurrence of frontal collision, any upward movement of the steering column 12 is suppressed, so that the following accuracy of the steering wheel 22 with respect to the trajectory in the movement of the driver's head can be improved. Accordingly, it is possible to effectively secure safety of the driver.

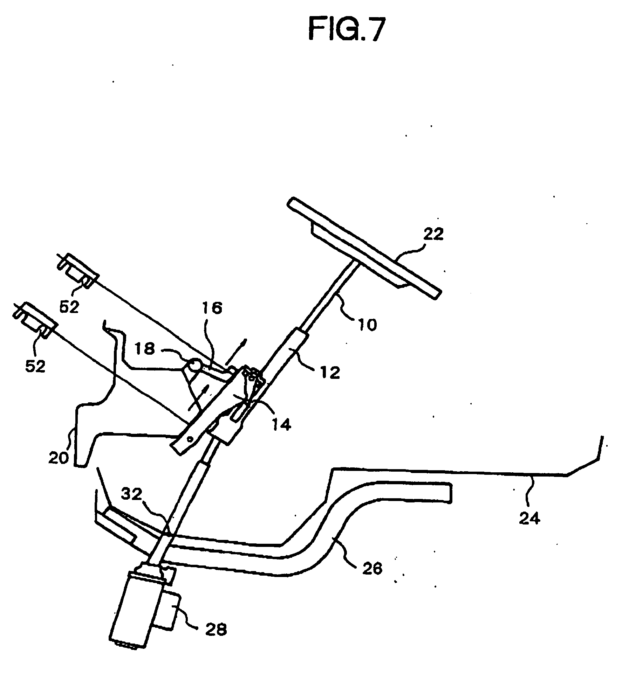

If the surrounding portions of the instrument panel and the pedal bracket are deformed upwards along with the occurrence of frontal collision of the vehicle, the steering column bracket is also moved upwards. As a result, even if the rotational center thereof is shifted toward the rear side of the vehicle and upward movement thereof is suppressed, the following accuracy of the steering wheel with respect to the trajectory in the movement of the driver's head may deteriorate.
Therefore, besides the constructions of the aforementioned embodiments, as shown in Fig. 7, it is preferable that the steering column bracket 14 is fixedly secured to the instrument member 18 and the pedal bracket 20 with bolts through a substantially U-shaped engagement hole 52 which opens downwards in an axial direction of the steering column 12.

According to such a construction, when the surrounding portions of the instrument member 18 and the pedal bracket 20 are deformed upwards as indicated by arrows In the drawing figure along with the occurrence of frontal collision of the vehicle, the bolt is unfastened from the engagement hole 52, so that the steering column bracket 14 can be separated from the instrument member 18 and the pedal bracket 20. As a result, without upward movement of the steering column 12 due to the instrument member 18 and the pedal bracket 20, it is possible to prevent deterioration of the following accuracy of the steering wheel with respect to the trajectory in the movement of the driver's head. In addition, since the lower portion of the steering column 12 is connected to the cab floor 24 or the reinforcing member 26 via the steering support rod 36 or the steering support wires 46 and 50, the upward movement of the steering column 12 due to deformation of the cab can be suppressed.

## Claims

1. A steering column supporting structure for providing support for a steering column (12) which is attached to a cab by a steering column bracket (14),
said steering column (12) supporting a steering shaft (10), the steering shaft (10) disposed under the steering column (12) defining an intersection (32) of its axis with the the cab floor (24) and a steering wheel (22) being attached to the end of the steering shaft (10) extending upwards of the steering column (12),
wherein an upper portion of the steering column bracket (14) is secured to a member (18) configured to constitute an instrument panel,
wherein a middle portion of the steering column bracket (14) is secured to a pedal bracket (20) which supports a pedal,
**characterized in that**
the structure is defining a rotational center of the steering column in respect to a fore and aft direction of a vehicle in the occurrence of frontal collision,
wherein a rotational center shifting apparatus is provided that shifts the rotational center rearwards from a location (C1) in about the vicinity of a connection portion of the steering shaft (10) and a steering gear box (28) toward a location (C2) on the rear side of the intersection (32) so as to enable the steering wheel (22) to follow the trajectory in the movement of a driver's head.

2. A steering column supporting structure according to claim 1, **characterized in that** the rotational center shifting apparatus comprises:
a rotating member (34) arranged to be capable of rotating about a rotational axis extending in a width direction of the vehicle, and attached to a portion of a reinforcing member (26) that reinforces the cab floor (24), the portion being located in the rear side of the vehicle with respect to the intersection (32); and
a steering support rod (36) having an upper end thereof rotatably attached to a lower portion of the steering column (12) and a lower end thereof rotatably attached to another portion rather than a rotating axis of the rotating member (34).

3. A steering column supporting structure according to claim 2, **characterized in that** the rotational center shifting apparatus further comprises an auxiliary steering support rod (44) having one end thereof attached to a portion of the reinforcing member (26) that reinforces the cab floor (24), which portion is located in the front side of the vehicle with respect to the intersection (32), and the other end thereof rotatably fixed to the rotating member (34), and
the other end of the auxiliary steering support rod (44) is fixed at a position such that the rotating member (34) is rotated in a direction in which the steering support rod (36) is pulled downwards when the auxiliary steering support rod (44) is moved toward the rear side of the vehicle due to deformation of the reinforcing member (26).

4. A steering column supporting structure according to claim 1, **characterized in that** the rotational center shifting apparatus is configured such that the lower portion of the steering column (12) is connected via a steering support wire (46) to an upper surface of the cab floor (24) located in the rear side of the vehicle with respect to the intersection (32).

5. A steering column supporting structure according to claim 1, **characterized in that** the rotational center shifting apparatus is configured such that a lower portion of the steering column (12) is connected to a rear tower surface of the cab floor (24) via a steering support wire (52) configured such that a tensile direction of the steering support wire is changed by a rotating member (50) fixed at a portion of the reinforcing member (26) that reinforce the cab floor (24), which portion is located in the rear side of the vehicle with respect to the intersection (32).

6. A steering column supporting structure according to claim 1, **characterized in that** the rotational center shifting apparatus is configured such that a lower portion of the steering column (12) is connected to a lower portion of the steering column bracket (14) via a steering support wire (52) configured such that a tensile direction of the steering support wire is changed by a rotating member (48) secured to a portion of the reinforcing member (26) that reinforce the cab floor (24), which portion is located in the rear side of the vehicle with respect to the intersection (32).

7. A steering column supporting structure according to claim 1, **characterized in that** the steering column bracket (14) is secured to the member (18) configured to constitute the instrument panel and the pedal bracket (20) with threaded bolts through a substantially U-shaped engagement hole (52) which opens downwards in an axial direction of the steering column (12).

## Patentansprüche

1. Lenksäulenlagerungsanordnung zum Bereitstellen einer Lagerung für eine Lenksäule (12), die mit einer Kabine durch eine Lenksäulenhalterung (14) verbunden ist, wobei die Lenksäule (12) eine Lenkwelle (10) lagert, wobei die Lenkwelle (10) unter der Lenksäule (12) angeordnet ist, einen Schnittpunkt (32) ihrer Achse mit dem Kabinenboden (24) bildend, und einem Lenkrad (22), das mit dem Ende der Lenkwelle (10) verbunden ist, die sich nach oberhalb der Lenksäule (12) erstreckt,
wobei ein oberer Abschnitt der Lenksäulenhalterung (14) an einem Teil (18) befestigt ist, das konfiguriert ist, ein Armaturenbrett zu bilden,
wobei ein Mittelabschnitt der Lenksäulenhalterung (14) an einer Pedalhalterung (20) befestigt ist, die ein Pedal lagert,
**dadurch gekennzeichnet, dass**
die Anordnung eine Drehmitte der Lenksäule in Bezug auf eine Vorwärts- und Rückwärts-Richtung eines Fahrzeuges beim Auftreten einer frontalen Kollision bildet,
wobei eine Drehmitten- Verschiebevorrichtung vorgesehen ist, die die Drehmitte nach hinten von einem Ort (C1) in ungefähr der Nähe eines Verbindungsabschnittes der Lenkwelle (10) und eines Lenkgetriebekastens (28) in Richtung zu einem Ort (C2) auf der Rückseite des Schnittpunktes (32) verschiebt, um dem Lenkrad (22) zu ermöglichen, der Bahn bei der Bewegung eines Kopfes des Fahrers zu folgen.

2. Lenksäulenlagerungsanordnung nach Anspruch 1, **dadurch gekennzeichnet, dass** die Drehmitten- Verschiebeanordnung aufweist:
ein Drehteil (34), angeordnet, um in der Lage zu sein, sich um eine Drehachse, die sich in einer Richtung der Breite des Fahrzeuges erstreckt, zu drehen und verbunden mit einem Abschnitt eines Verstärkungsteiles (26), das den Kabinenboden (24) verstärkt, wobei der Abschnitt in der hinteren Seite des Fahrzeuges in Bezug auf den Schnittpunkt (32) angeordnet ist; und einen Lenkträgerstab (36), dessen oberes Ende drehbar mit einem unteren Abschnitt der Lenksäule (12) verbunden ist, während ein unteres Ende desselben drehbar mit einem weiteren Abschnitt statt mit einer Drehachse des Drehteiles (34) drehbar verbunden ist.

3. Lenksäulenlagerungsanordnung nach Anspruch 2, **dadurch gekennzeichnet, dass** die Drehmitten- Verschiebeanordnung außerdem aufweist einen Hilfslenkträgerstab (44), dessen eines Ende mit einem Abschnitt des Verstärkungsteiles (24), das den Kabinenboden verstärkt, verbunden ist, wobei dieser Abschnitt in der vorderen Seite des Fahrzeuges in Bezug auf den Schnittpunkt (32) angeordnet ist, während das andere Ende drehbar an dem Drehteil (34) befestigt ist, und das andere Ende des Hilfslenkträgerstabes (44) an einer Position derart befestigt ist, dass das Drehteil (34) in eine Richtung gedreht wird, in die der Lenkträgerstab (36) nach unten gezogen wird, wenn der Hilfslenkträgerstab (44) in Richtung zu der hinteren Seite des Fahrzeuges infolge der Verformung des Verstärkungsteiles (24) bewegt wird.

4. Lenksäulenlagerungsanordnung nach Anspruch 1, **dadurch gekennzeichnet, dass** die Drehmitten- Verschiebeanordnung derart konfiguriert ist, dass der untere Abschnitt der Lenksäule (12) über einen Lenklagerungsdraht (46) an einer oberen Oberfläche des Kabinenbodens (24), angeordnet in der hinteren Seite der Fahrzeugbreite in Bezug auf den Schnittpunkt (32), verbunden ist.

5. Lenksäulenlagerungsanordnung nach Anspruch 1, **dadurch gekennzeichnet, dass** die Drehmitten- Verschiebeanordnung derart konfiguriert ist, dass ein unterer Abschnitt der Lenksäule (12) mit einer hinteren unteren Oberfläche des Kabinenbodens (24) über einen Lenklagerungsdraht (52) verbunden ist, konfiguriert derart, dass eine Zugrichtung des Lenklagerungsdrahtes verändert wird durch ein Drehteil (50), befestigt an einem Abschnitt des Verstärkungsteiles (26), das den Kabinenboden (24) verstärkt, dessen Abschnitt in der hinteren Seite des Fahrzeuges in Bezug auf den Schnittpunkt (32) angeordnet ist.

6. Lenklagerungsanordnung nach Anspruch 1, **dadurch gekennzeichnet, dass** die Drehmitten- Verschiebeanordnung derart konfiguriert ist, dass ein unterer Abschnitt der Lenksäule (12) verbunden ist mit einem unteren Abschnitt der Lenksäulenhalterung (14) über einen Lenklagerungsdraht (52), konfiguriert derart, dass eine Zugrichtung des Lenklagerungsdrahtes verändert wird durch ein Drehteil (48), befestigt an einem Abschnitt des Verstärkungsteiles (26), das den Kabinenboden (24) verstärkt, dessen Abschnitt in der hinteren Seite des Fahrzeuges in Bezug auf den Schnittpunkt (32) angeordnet ist.

7. Lenksäulenlagerungsanordnung nach Anspruch 1, **dadurch gekennzeichnet, dass** die Lenksäulenhalterung (14) an dem Teil (18) befestigt ist, konfiguriert, die Armaturentafel und die Pedalhalterung (20) zu bilden, verschraubt mit Schrauben durch eine im Wesentlichen U- förmige Eingriffsbohrung (52), die sich in einer axialen Richtung der Lenksäule (12) nach unten öffnet.

## Revendications

1. Structure de support de colonne de direction pour fournir le support à une colonne de direction (12) qui est fixée à une cabine par un support de colonne de direction (14),
ladite colonne de direction (12) supportant un arbre de direction (10), l'arbre de direction (10) étant disposé sous la colonne de direction (12) définissant une intersection (32) de son axe avec le plancher de la cabine (24) et un volant (22) étant fixé à l'extrémité de l'arbre de direction (10) s'étendant vers le haut de la colonne de direction (12),
dans laquelle une partie supérieure du support de colonne de direction (14) est fixée à un élément (18) configuré pour constituer un tableau de bord,
dans laquelle une partie centrale du support de colonne de direction (14) est fixée à un support de pédale (20) qui supporte une pédale,
**caractérisée en ce que** :
la structure définit un centre de rotation de la colonne de direction par rapport à une direction longitudinale d'un véhicule en cas de collision frontale,
dans laquelle on prévoit un appareil de déplacement de centre de rotation qui déplace le centre de rotation vers l'arrière à partir d'un emplacement (C1) à peu près à proximité d'une partie de raccordement de l'arbre de direction (10) et d'un boîtier de direction (28) vers un emplacement (C2) du côté arrière de l'intersection (32) pour permettre au volant (22) de suivre la trajectoire de mouvement de tête d'un conducteur.

2. Structure de support de colonne de direction selon la revendication 1, **caractérisée en ce que** l'appareil de déplacement de centre de rotation comprend :
un élément rotatif (34) agencé pour pouvoir tourner autour d'un axe de rotation s'étendant dans le sens de la largeur du véhicule, et fixé à une partie d'un élément de renforcement (26) qui renforce le plancher de cabine (24), la partie étant positionnée du côté arrière du véhicule par rapport à l'intersection (32) ; et
une tige de support de direction (36) ayant son extrémité supérieure fixée en rotation à une partie inférieure de la colonne de direction (12) et son extrémité inférieure fixée en rotation à une autre partie plutôt qu'un axe de rotation de l'élément rotatif (34).

3. Structure de support de colonne de direction selon la revendication 2, **caractérisée en ce que** l'appareil de déplacement de centre de rotation comprend en outre une tige de support de direction auxiliaire (44) ayant sa première extrémité fixée à une partie de l'élément de renforcement (26) qui renforce le plancher de cabine (24), laquelle partie est positionnée du côté avant du véhicule par rapport à l'intersection (32) et son autre extrémité fixée en rotation à l'élément rotatif (34), et
l'autre extrémité de la tige de support de direction auxiliaire (44) est fixée dans une position de sorte que l'élément rotatif (34) tourne dans une direction dans laquelle la tige de support de direction (36) est tirée vers le bas lorsque la tige de support de direction auxiliaire (44) est déplacée vers le côté arrière du véhicule, en raison de la déformation de l'élément de renforcement (26).

4. Structure de support de colonne de direction selon la revendication 1, **caractérisée en ce que** l'appareil de déplacement de centre de rotation est configuré de sorte que la partie inférieure de la colonne de direction (12) est raccordée via un câble de support de direction (46) à une surface supérieure du plancher de cabine (24) positionnée du côté arrière du véhicule par rapport à l'intersection (32).

5. Structure de support de colonne de direction selon la revendication 1, **caractérisée en ce que** l'appareil de déplacement de centre de rotation est configuré de sorte qu'une partie inférieure de la colonne de direction (12) est raccordée à une surface inférieure arrière du plancher de cabine (24) via un câble de support de direction (52) configuré de sorte qu'une direction de tension du câble de support de direction est modifiée par un élément rotatif (50) fixé au niveau d'une partie de l'élément de renforcement (26) qui renforce le plancher de cabine (24), laquelle partie est positionnée du côté arrière du véhicule par rapport à l'intersection (32).

6. Structure de support de colonne de direction selon la revendication 1, **caractérisée en ce que** l'appareil de déplacement de centre de rotation est configuré de sorte qu'une partie inférieure de la colonne de direction (12) est raccordée à une partie inférieure du support de colonne de direction (14) via un câble de support de direction (52) configuré de sorte qu'une direction de tension du câble de support de direction est modifiée par un élément rotatif (48) fixé à une partie de l'élément de renforcement (26) qui renforce le plancher de cabine (24), laquelle partie est positionnée du côté arrière du véhicule par rapport à l'intersection (32).

7. Structure de support de colonne de direction selon la revendication 1, **caractérisée en ce que** le support de colonne de direction (14) est fixé à l'élément (18) configuré pour constituer le tableau de bord et le support de pédale (20), avec des boulons filetés par le biais d'un trou de mise en prise sensiblement en forme de U (52) qui s'ouvre vers le bas dans une direction axiale de la colonne de direction (12).
